# EUROPÄISCHE PATENTSCHRIFT

(11) **EP 2 407 414 B1**
(45) Veröffentlichungstag und Bekanntmachung des Hinweises auf die Patenterteilung: **06.03.2013**
(21) Anmeldenummer: 11005593.6
(22) Anmeldetag: 08.07.2011
(51) Int. Cl.: B60L 11/18, B60L 8/00, B66F 9/075, B66F 9/24

(54) **Hubgerüst für ein Flurförderzeug**
Lifting frame for an industrial truck
Châssis de levage pour chariot de manutention

(30) Priorität: 16.07.2010 DE 102010027284
(43) Veröffentlichungstag der Anmeldung: 18.01.2012
(73) Patentinhaber: STILL GmbH, 22113 Hamburg (DE)
(72) Erfinder: Röhr, Joachim, Dr., 22299 Hamburg (DE); Jörn, Tim, 22335 Hamburg (DE); Pohl, Sven, 19300 Grabow (DE); Schweig, Ulrich, 22303 Hamburg (DE)
(74) Vertreter: Geirhos, Johann

(56) Entgegenhaltungen:
- EP-A1- 0 236 804
- DE-A1-102008 019 069
- DE-A1-102009 006 175
- GB-A- 2 019 809
- JP-A- 2000 351 594
- US-A- 3 730 368
- US-A1- 2009 114 485
- US-A1- 2010 039 319

## Beschreibung

Die Erfindung betrifft ein Hubgerüst für ein Flurförderzeug mit einem Leuchtelement, wobei ein Lastaufnahmemittel an dem Hubgerüst höhenverstellbar geführt ist.

Beim Einsatz von Flurförderzeugen ist insbesondere in geschlossenen Räumen oder im Freien bei abnehmendem Tageslicht eine ausreichende Beleuchtung des Arbeitsbereichs des Flurförderzeugs sehr wichtig. Beispielsweise kommt es beim Betrieb des Flurförderzeugs in mit Regalsystemen ausgestatteten Lagerhallen auf eine gute Ausleuchtung des Regalsystems an, um beim Ein- und Auslagern von Gütern weder diese noch das Regalsystem zu beschädigen und generell Unfälle zu vermeiden. Hierzu bieten Hersteller von Flurförderzeugen Beleuchtungssysteme für Flurförderzeuge an, die den Vorderbereich des Flurförderzeugs ausleuchten. Diese als Suchscheinwerfer oder einfach Sucher bezeichneten Beleuchtungssysteme sind in der Regel am Chassis, am Fahrerschutzdach oder am Hubgerüst des Flurförderzeugs montiert. Die Befestigung derartiger Beleuchtungssysteme erfolgt über zusätzliche Halteelemente, beispielsweise Halter. Bei einer Befestigung der Halter an dem Hubgerüst werden in der Regel Befestigungsbohrungen im Hubgerüst eingesetzt, an denen die Halter mit entsprechenden Befestigungsschrauben befestigt werden können. Die Einbringung von Befestigungsbohrungen in dem Hubgerüst bedingt jedoch ein Materialschwächung des Hubgerüstes und eine entsprechende Verringerung der Stabilität und Steifigkeit des Hubgerüstes. Zudem erhöhen die zusätzlichen Halter und Befestigungsschrauben die Teileanzahl, so dass der Herstellaufwand des Hubgerüstes zunimmt. Darüber hinaus verursacht die Montage der Leuchtelemente über die zusätzlichen Halter und die Schraubverbindungen einen hohen Montageaufwand, so dass der Herstellaufwand weiter erhöht wird. Zudem treten in der Praxis häufig Fälle auf, dass im Betrieb des Flurförderzeugs die am Hubgerüst angeordneten Leuchtelemente beschädigt oder abgefahren werden, so dass ein entsprechender Reparaturaufwand entsteht.

Aus der JP 2000-351594 A und der US 2009/0114485 A1 sind gattungsgemäße Hubgerüste bekannt, bei denen Leuchtelement mittels zusätzlicher Halter an den Außenseiten des Hubgerüstes angebaut sind.

Die US 3 730 368 A offenbart ein Flurförderzeug mit einem Hubgerüst und einem daran anhebbar und absenkbar angeordneten Lastaufnahmemittel. Das Lastaufnahmemittel dient zur Handhabung von Rollen mit einer mittigen Aussparung und ist von einem an einem vertikalen Ausleger angeordneter vertikal nach unten abstehenden Dorn und einer verstellbaren Platte gebildet. In dem Ausleger ist eine Lichtquelle eingebaut, um die Oberseite der Rolle anzuleuchten. In der Spitze des Dorns ist eine Fotozelle eingebaut, die ein Signal abgibt, wenn kein von der Oberseite der Rolle reflektiertes Licht der Lichtquelle von der Fotozelle ermittelt wird. Damit kann einer Bedienperson, deren Sicht auf den Dorn versperrt ist, ein Signal geliefert werden, wenn der Dorn über der mittigen Aussparung der aufzunehmenden Rolle ist, um durch ein Absenken und Einfahren des Dorns in die Aussparung die Aufnahme der Rolle zu erleichtern.

Die US 2010/0039319 A1 offenbart ein System, um im Mietgeschäft verliehene Komponenten eines Turmdrehkrans sicher warten und verfolgen zu können. An der Komponente des Turmdrehkarns wird eine Informationseinheit befestigt. Die Stromversorgung der Informationseinheit kann eine Batterie oder eine Solarzelle verwendet werden. An einem Fahrzeug, das die Komponente des Turmdrehkrans transportiert, beispielsweise ein Flurförderzeug, kann ein Komponentenmonitor befestigt werden.

Der vorliegenden Erfindung liegt die Aufgabe zugrunde, ein Hubgerüst der eingangs genannten Gattung zur Verfügung zu stellen, das für die Leuchtelemente eine verbesserte und kostengünstige Anbringung sowie eine vor Beschädigungen geschützte Anbringung ermöglicht.

Diese Aufgabe wird erfindungsgemäß dadurch gelöst, dass das Hubgerüst mit mindestens einem Leuchtelement versehen ist, das in einem tragenden und kraftführenden Hubgerüstelement des Hubgerüstes integral eingebaut ist. Der erfindungsgemäße Gedanke besteht somit darin, ein oder mehrere Leuchtelemente direkt in ein Hubgerüstelement zu integrieren, so dass für die Halterung des Leuchtelements kein zusätzliches Halteelement, beispielsweise ein zusätzlicher angeschraubter Halter, erforderlich ist. Als integraler Einbau ist hierbei eine Anordnung und Befestigung der Leuchtelemente in dem Hubgerüstelement anzusehen. Als Hubgerüstelement im Sinne der Erfindung sollen hierbei die tragende und kraftführende Bauteile des Hubgerüstes angesehen werden, insbesondere die vertikalen Hubgerüstprofile, die Querstreben zum seitlichen Verbinden der seitlich beabstandeten Hubgerüstprofile, die Anschlussbauteile zum Anschließen der Querstreben an die vertikalen Hubgerüstprofile sowie kraftführende Anschlussbauteile für den Hubantrieb oder den Neigeantrieb des Hubgerüstes. Der Entfall eines zusätzlichen Halters für die Befestigung des Leuchtelements führt durch eine Reduzierung der Teileanzahl zu einem verringerten Herstellaufwand und einem verringerten Montageaufwand. Zudem sind bei der Erfindung für die Anbringung der Leuchtelemente keine Befestigungsbohrungen in dem Hubgerüst erforderlich, so dass eine Materialschwächung des Hubgerüstes vermieden wird und das erfindungsgemäße Hubgerüst eine hohe Stabilität aufweist. Zudem kann durch die Integration des Leuchtelements in ein einsprechendes Hubgerüstelement eine Anbringung des Leuchtelements innerhalb der Kontur des Hubgerüstelements und somit innerhalb der Kontur des Hubgerüstes erzielt werden. Hierdurch ist eine geschützte Anordnung des Leuchtelements erzielbar, bei der eine Beschädigung des Leuchtelements im Betrieb des Flurförderzeugs wirkungsvoll vermieden werden kann.

Gemäß einer bevorzugten Ausgestaltungsform der Erfindung ist das Hubgerüstelement von einem vertikalen Hubgerüstprofil eines Standmastes oder eines Ausfahrmastes des Hubgerüstes gebildet. Ein Hubgerüst weist in der Regel mehrere seitlich beabstandete vertikale Hubgerüstprofile auf. Die Integration der Leuchtelemente in die vertikalen Hubgerüstprofile des Standmastes oder eines Ausfahrmastes ermöglicht eine Anordnung der Leuchtelemente mit geringem Herstellaufwand.

Besondere Vorteile sind erzielbar, wenn gemäß einer Ausgestaltungsform der Erfindung das Hubgerüstelement von einer Querstrebe oder einem Anschlussbauteil der Querstrebe gebildet ist. Bekannte Hubgerüste weisen in der Regel am vertikal oberen Bereich des Standmastes bzw. am oberen und unteren Bereich eines Ausfahrmastes jeweils eine Querstrebe zur Versteifung der beiden seitlich beabstandeten vertikalen Hubgerüstprofile auf, beispielsweise ein Rohrprofil. Die Verbindung der Querstrebe an die beiden vertikalen Hubgerüstprofile des Standmastes bzw. des Ausfahrmastes erfolgt durch jeweils ein entsprechendes Anschlussbauteil, beispielsweise ein Schmiedestück. In entsprechende Ausnehmungen der Querstrebe bzw. der entsprechenden Anschlussbauteile kann ein Leuchtelement auf einfache Weise eingebaut und somit integriert werden. Insbesondere bei als Schmiedestücken ausgebildeten Anschlussbauteilen können entsprechende Ausnehmungen zur Aufnahme der Leuchtelemente bereits im Schmiedevorgang hergestellt werden, so dass sich ein geringer Bauaufwand für die integrierten Leuchtelemente ergibt.

Alternativ oder zusätzlich ist möglich, wenn gemäß einer Ausgestaltungsform der Erfindung das Hubgerüstelement von einem Anschlussbauteil eines Neigeantriebs des Standmastes gebildet ist. Bei als Gabelstaplern ausgebildeten Flurförderzeugen ist in der Regel ein Neigeantrieb zum Neigen des Hubgerüstes nach Vorne bzw. Hinten vorgesehen, der beispielsweise von entsprechenden Neigezylindern gebildet ist, die mit den Hubgerüstprofilen des Standmastes verbunden sind. Die Anbindung des Neigeantriebs an das Hubgerüst erfolgt durch entsprechende Anschlussbauteile, beispielsweise Schmiedestücke, die an den Hubgerüstprofilen des Standmastes befestigt sind und entsprechende Neigezyfinderlager bilden. In entsprechende Ausnehmungen der entsprechenden Anschlussbauteile für den Neigezylinderantrieb kann ein Leuchtelement auf einfache Weise eingebaut und somit integriert werden. Insbesondere bei als Schmiedestücken ausgebildeten Anschlussbauteilen können entsprechende Ausnehmungen zur Aufnahme der Leuchtelemente bereits im Schmiedevorgang hergestellt werden, so dass sich ein geringer Bauaufwand für die integrierten Leuchtelemente ergibt.

Das in das Hubgerüst integrierte Leuchtelement kann gemäß einer Ausführungsform der Erfindung als Arbeitsscheinwerfer oder Fahrtlicht bzw. Standlicht ausgebildet sein. Das integrierte Leuchtelement bildet somit eine aktive Beleuchtung, mit der bei der Ausbildung als Arbeitsscheinwerfer die Arbeitssituation beleuchtet und ausgeleuchtet werden kann, bzw. im Falle der Ausbildung als Fahrlicht und/oder Standlicht der Fahrweg des Flurförderzeugs vor dem Hubgerüst ausgeleuchtet werden kann.

Alternativ oder zusätzlich ist es möglich, gemäß einer Ausführungsform der Erfindung das Leuchtelement als Fahrzeugszustandsanzeige auszubilden. Das Leuchtelement bildet somit eine Zustandsanzeige zum aktuellen Fahrzeugszustand, mit dem beispielsweise angezeigt werden kann, dass das Flurförderzeug sich in einer In-Betriebs-Stellung oder einer Außer-Betriebs-Stellung befindet. Weitere denkbare Fahrzeugszustände, die an entsprechenden Leuchtelementen angezeigt werden können, wären beispielsweise der Betrieb des Fahrzeugs in einem Normal-Betriebsmodus oder einem Energiespar-Modus oder der Volllastbetrieb. Die Leuchtelemente können hierbei derart an dem Hubgerüst integriert werden, dass die Information von der Bedienperson des Flurförderzeugs erfasst werden kann und/oder von der Umgebung. Die Information des Fahrzeugszustands kann somit beispielsweise von einem außerhalb des Flurförderzeugs befindlichen Fuhrparkleiter erfasst werden.

Alternativ oder zusätzlich ist es möglich, gemäß einer Ausführungsform der Erfindung das Leuchtelement als Betriebszustandsanzeige, insbesondere als Zustandsanzeige für die Hubgerüsteinstellungen, auszubilden. Als denkbare Hubgerüsteinstellungen bzw. Betriebsparameter können mit derartigen Leuchtelementen einer oder mehrere der folgenden Einstellungen angezeigt werden:
- Hub- bzw. Senkengeschwindigkeit eines Lastaufnahmemittels
- Hubhöhe
- Neigegeschwindigkeit des Hubgerüstes
- Mastsenkrechtstellung
- Überlastung bzw. Normalbetrieb

Die Leuchtelemente können hierbei derart an dem Hubgerüst integriert werden, dass die Hubgerüsteinstellungen von der Bedienperson des Flurförderzeugs erfasst werden kann und/oder von der Umgebung. Die Information des Fahrzeugszustands kann somit beispielsweise von einem außerhalb des Flurförderzeugs befindlichen Fuhrparkleiter erfasst werden. Bevorzugt sind hierzu Leuchtelemente in verschiedenen Farben vorgesehen. Dadurch kann eine verbesserte Unterscheidung bei mehreren dargestellten Hubgerüsteinstellungen erzielt werden. Zudem ist durch unterschiedlich farbige Leuchtelemente eine unterschiedliche Darstellung für den Normalbetrieb und Abweichungen hiervon möglich.

Alternativ oder zusätzlich ist es möglich, gemäß einer Ausführungsform der Erfindung das Leuchtelement als Positionsbeleuchtung auszubilden. Mit einer Integration einer derartigen Positionsleuchte im oberen Bereich des Hubgerüstes, beispielsweise des Standmastes oder eines Ausfahrmastes, kann der Bedienperson zur leichteren Abschätzung der Durchfahrthöhe, beispielsweise an einer Tordurchfahrt, dienen.

Ein derartiges, als Positionsbeleuchtung ausgebildetes Leuchtelement kann als fluoreszierendes Kunststoffbauteil ausgebildet sein. Hierdurch ergibt sich eine Positionsbeleuchtung ein geringer Bauaufwand, da keine Stromversorgung erforderlich ist.

Bei einer Ausbildung des Leuchtelements als Fahrzeugszustandsanzeige und/oder Betriebszustandsanzeige ist gemäß einer bevorzugten Weiterbildung der Erfindung vorgesehen, dass das Leuchtelement mit einer elektronischen Fahrzeugsteuerung oder Sensoreinrichtungen in Wirkverbindung steht. In der elektronischen Fahrzeugsteuerung bzw. entsprechenden Sensoreinrichtungen können die an dem Leuchtelement anzuzeigenden Fahrzeugszustände bzw. Betriebszustände auf einfache Weise gewonnen werden.

Die Verbindung von der elektronischen Fahrzeugsteuerung bzw. den Sensoreinrichtungen zu dem Leuchtelement an dem Hubgerüst kann über ein Verbindungskabel erfolgen. Besondere Vorteile hinsichtlich eines einfachen Aufbaus ergeben sich, wenn die Verbindung als drahtlose Verbindung ausgebildet ist.

Alternativ oder zusätzlich ist es möglich, gemäß einer Ausführungsform der Erfindung das Leuchtelement als Sicherheitsbeleuchtung auszubilden. Die Integration der Leichtelemente in das Hubgerüst ermöglicht auf einfache Weise, eine Sicherheitsbeleuchtung zur sicherheitstechnischen Gestaltung des Hubgerüstes zu bilden, mit der die Umrisse des Hubgerüstes kenntlich gemacht werden können.

Das Leuchtelement ist gemäß einer bevorzugten Ausführungsform von mindestens einer LED gebildet. Eine LED-Beleuchtung weist einen geringen Stromverbrauch bei langer Lebensdauer auf, so dass sich bei einem integralen Einbau in das Hubgerüst Vorteile ergeben. Die LED kann hierbei einzeln eingebaut werden. Es ist ebenfalls ein Einbau eines aus mehreren LED's bestehenden Leuchtelements in einem Lichtband oder einem Flächenverband möglich.

Die Energieversorgung des Leuchtelements kann gemäß einer möglichen Weiterbildung der Erfindung über das elektrische Bordnetz des Flurförderzeugs erfolgen. Hierzu ist lediglich ein elektrisches Verbindungskabel vom Fahrzeugkörper des Flurförderzeugs zum Hubgerüst zu führen.

Alternativ ist möglich, dass die Energieversorgung des Leuchtelements über ein in der Nähe des Leuchtelements angeordnetes photovoltaisches Element, insbesondere eine Solarzelle, erfolgt. Mit einer derartigen lokalen Stromversorgung des Leuchtelements durch eine Solarzelle, die in der Nähe des im Hubgerüst integrierten Leuchtelements, am entsprechenden Hubgerüstelement angeordnet ist, wird der Verkabelungsaufwand durch den Entfall eines Verbindungskabel zwischen dem Hubgerüst und dem Fahrzeugkörper des Flurförderzeugs weiter verringert. Insbesondere bei einem Leuchtelement mit einem geringen Stromverbrauch, beispielsweise einer Verwendung des Leuchtelements als Fahrzeugszustandsanzeige, als Betriebszustandsanzeige, insbesondere als Zustandsanzeige für die Hubgerüsteinstellungen, bzw. als Positionsbeleuchtung kann hierbei eine einfach aufgebaute Stromversorgung der am Hubgerüst integrierten Leuchtelemente erzielt werden. Bevorzugt ist hierbei die Solarzelle zusammen mit dem Leuchtelement in der Querstrebe oder dem Anschlussbauteil der Querstrebe bzw. dem Anschlussbauteil der Neigezylindereinrichtung untergebracht bzw. angebracht. Sofern ein elektrischer Energiespeicher, beispielsweise eine Pufferbatterie, vorgesehen ist, die von der Solarzelle aufgeladen wird, kann auf einfache Weise ein Betrieb des Leuchtelements bei Dunkelheit oder ungenügender Lichtausbeute sichergestellt werden.

Die Erfindung betrifft weiterhin ein Flurförderzeug mit einem erfindungsgemäßen Hubgerüst nach einem der vorangegangenen Ansprüche. Durch die Integration von Leuchtelementen in das Hubgerüst, die die Funktion einer Fahrzeugszustandsanzeige und/oder die Funktion einer Betriebszustandsanzeige, insbesondere als Zustandsanzeige für die Hubgerüsteinstellungen, aufweist, kann die Bedienung des Flurförderzeugs durch die Bedienperson erleichtert werden, da über die an dem Hubgerüst integrierten Leuchtelemente eine einfache Informationsaufnahme für die Bedienperson im Betrieb des Flurförderzeugs ermöglicht wird. Bei der Erfindung ist insbesondere während der Aufnahme bzw. dem Absetzten einer Last, wobei die Bedienperson den Blick auf das an dem Hubgerüst angeordnete Lastaufnahmemittel richtet, eine Informationsaufnahme möglich ohne den Blick auf eine Anzeige oder einen Display im Fahrerarbeitsplatz ändern zu müssen. Unter Flurförderzeug im Sinne der Erfindung sind alle denkbaren Flurförderzeuge mit einem Hubgerüst und einem an dem Hubgerüst höhenverstellbaren Lastaufnahmemittel zu verstehen. Hierunter fallen insbesondere Gegengewichtsgabelstapler, Schubgabelstapler, Schubmaststapler, Hubwagen mit einem Hubgerüst (bspw. deichsel- oder lenkergeführte Hochhubwagen bzw. Quersitzhochhubwagen). Auch sind Hochregalstaplern, Kommissionier- bzw. Regalbediengeräten (sogenannte Mann-oben-Geräte mit einem anhebbaren Fahrkorb), Containerstapler oder Reach-Stacker als erfindungsgemäße Flurförderzeuge anzusehen.

Weitere Vorteile und Einzelheiten der Erfindung werden anhand der in den schematischen Figuren dargestellten Ausführungsbeispiele näher erläutert. Hierbei zeigt
- Figur 1: ein Flurförderzeug mit einem erfindungsgemäßen Hubgerüst in einer Seitenansicht,
- Figur 2: den Bereich A des Hubgerüstes in einer perspektivischen Darstellung,
- Figur 3: den Bereich A der Figur 1 in einer Seitenansicht und
- Figur 4: den Bereich B der Figur 1 in einer Seitenansicht.

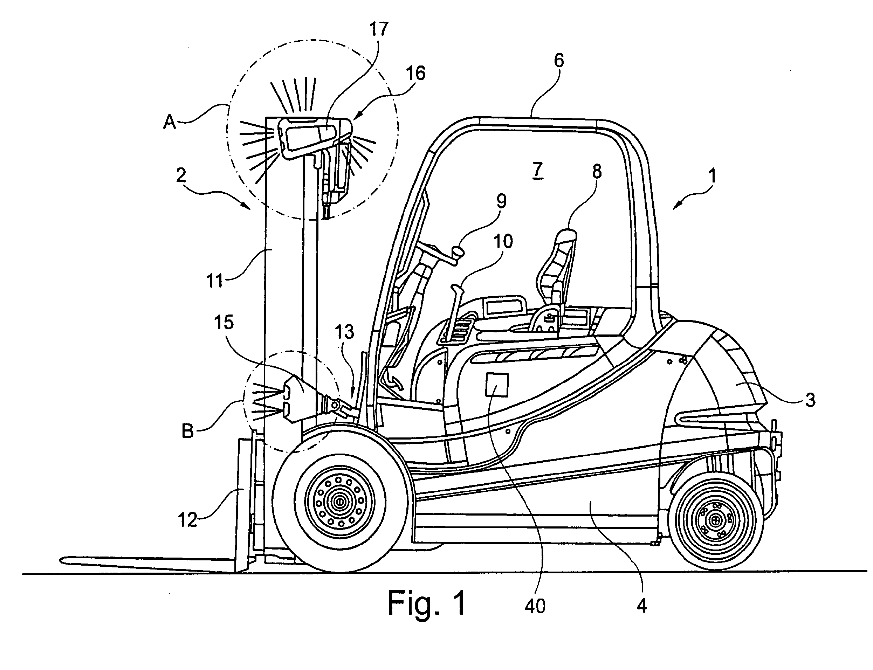

In der Figur 1 ist ein als Gegengewichtsgabelstapler ausgebildetes Flurförderzeug 1 als Beispiel eines Flurförderzeugs dargestellt. Das Flurförderzeug 1 ist im frontseitigen Bereich mit einem Hubgerüst 2 zur Aufnahme von Lasten und im heckseitigen Bereich mit einem Gegengewicht 3 versehen. Das Flurförderzeug 1 umfasst ein an einem Fahrzeugkörper 4 angeordnetes Fahrerschutzdach 6, innerhalb dessen sich eine Fahrerarbeitsplatz 7 befindet. Der Fahrerarbeitsplatz 7 umfasst im vorliegenden Ausführungsbeispiel einen Fahrersitz 8, eine Lenkeinrichtung 9 und mindestens ein im Fußraum angeordnetes Pedal zur Steuerung eines nicht näher dargestellten Fahrantriebs. Weiterhin sind in dem Fahrerarbeitsplatz 7 mehrere Bedienelemente 10 für eine Arbeitshydraulik angeordnet, die einen Hubantrieb und einen Neigeantrieb des Hubgerüsts sowie gegebenenfalls einen Zusatzverbraucher umfasst, beispielsweise einen Seitenschieberantrieb für ein Lastaufnahmemittel 12.

Das Hubgerüst 2 umfasst einen Standmast, der von zwei seitlich, in Fahrzeugquerrichtung beabstandet angeordneten vertikalen Hubgerüstprofilen 11 gebildet ist. Der Standmast ist mittels eines Neigeantriebs 13, der von Neigezylindern gebildet ist, in der Neigung verstellbar. An dem Hubgerüst 2 ist das Lastaufnahmemittel 12 höhenverstellbar angeordnet, das im dargestellten Ausführungsbeispiel von einer Lastgabel mit zwei Gabelzinken gebildet ist.

Der von den Neigezylindern gebildete Neigeantrieb 13 ist am Fahrzeugkörper 4 und am Standmast gelenkig angelenkt. Zur Anbindung des Neigeantriebs 13 an dem Standmast sind an den Hubgerüstprofilen 11 des Standmastes Anschlussbauteile 15 angeordnet, die Lager des Neigeantriebs 13 bilden. Die Anschlussbauteile 15 sind bevorzugt als Schmiedeteile oder Stahlteile ausgebildet, die an den vertikalen Hubgerüstprofilen 11 angeschweißt sind.

Im oberen Endbereich des Standmastes ist eine die beiden seitlich beabstandet angeordneten Hubgerüstprofile 11 verbindende Querstrebe 16 angeordnet. Die Anbindung der Querstrebe 16 an die Hubgerüstprofile 11 des Standmastes erfolgt mittels Anschlussbauteilen 17. Die Anschlussbauteile 17 sind bevorzugt als Schmiedeteile oder Stahlteile ausgebildet, die an den Hubgerüstprofilen 11 angeschweißt sind.

Das erfindungsgemäße Hubgerüst 2 kann als Einfach-Hubgerüst ausgebildetes sein, bei dem das Lastaufnahmemittel 12 in dem Standmast höhenverstellbar geführt ist. Zudem kann das erfindungsgemäße Hubgerüst 2 als Mehrfach-Hubgerüst ausgebildet sein, das ein oder mehrere in dem Standmast geführte Ausfahrmaste aufweist, in denen das Lastaufnahmemittel 12 höhenverstellbar geführt ist.

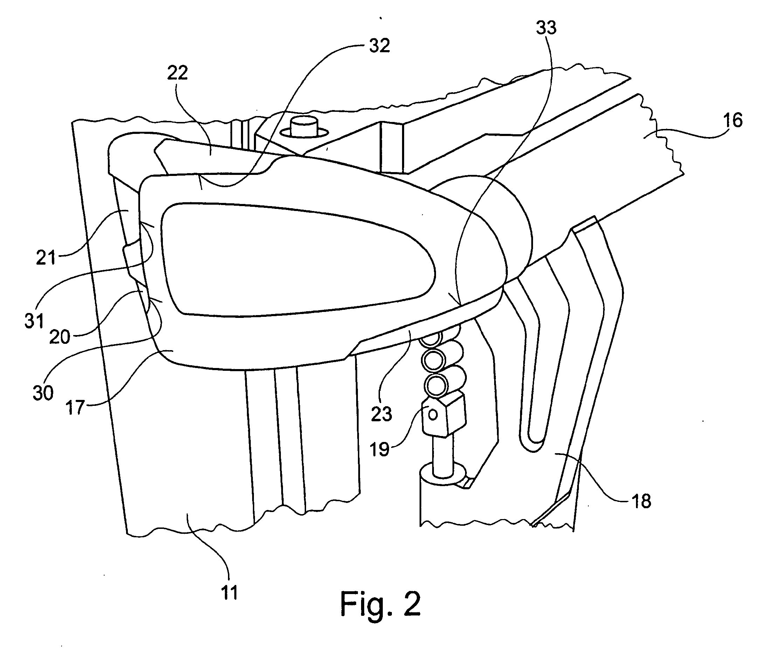

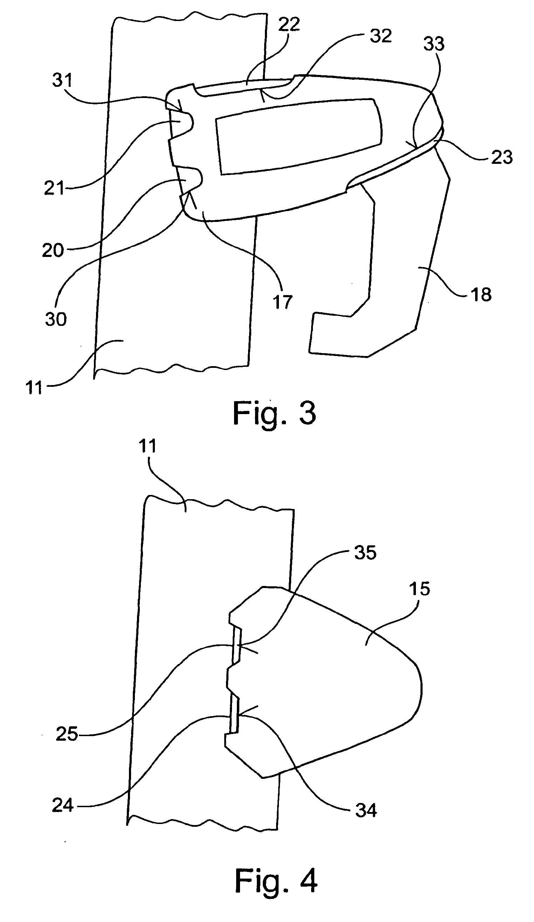

In den Figuren 2 und 3 ist ein Anschlussbauteil 17 für die Querstrebe 16 im oberen Bereich der Hubgerüstprofile 11 des Hubgerüstes 2 näher dargestellt.

Das Anschlussbauteil 17, das von einem Schmiede- oder Stahlteil gebildet sein kann, ist an der Außenseite des Hubgerüstprofils 11 befestigt, beispielsweise angeschweißt, und erstreckt sich in Richtung zu dem Fahrzeugkörper 4 nach hinten, wobei in dem nach hinten abstehenden Bereich die Querstrebe 16 an dem Anschlussbauteil 17 befestigt ist. Im dargestellten Ausführungsbeispiel ist die Querstrebe 16 von einem Rohr gebildet, das zwischen den beiden Anschlussbauteilen 17 angeordnet ist und mit den Anschlussbauteilen 17 verschweißt ist. An der Querstrebe 16 ist ein sich nach unten erstreckender Halter 18 befestigt, an dem eine Hubkette 19, die einen Bestandteil des Hubantriebs eines Ausfahrmastes des Hubgerüstes 2 bzw. des Lastaufnahmemittels 12 bildet, angelenkt ist.

Erfindungsgemäß ist in dem Anschlussbauteil 17 mindestens ein Leuchtelement 20, 21, 22, 23 integriert.

Das Anschlussbauteil 17 ist hierzu mit entsprechenden Ausnehmungen bzw. Aussparungen 30, 31, 32, 33 versehen, in denen die entsprechenden Leuchtelemente 20, 21, 22, 23 derart eingebaut sind, dass sich die Leuchtelemente 20, 21, 22, 23 vor Beschädigungen geschützt innerhalb der Außenkontur des Anschlussbauteils 17 integriert sind.

Die Leuchtelemente 20, 21 sind hierbei im vorderen Bereich des Anschlussbauteils 17 angeordnet und auf den Fahrweg vor dem Flurförderzeug 1 bzw. den Arbeitsbereich des Lastaufnahmemittels 12 gerichtet. Das Leuchtelement 20 ist hierbei im vorderen, unteren Bereich des Anschlussbauteils 17 und das Leuchtelement 21 im vorderen, oberen Bereich des Anschlussbauteils 17 angeordnet und integriert. Die Leuchtelemente 20, 21 können hierbei als Arbeitsscheinwerfer zur Beleuchtung des Arbeitsbereich bei niedrigem bzw. mittlerem Hubbereich des Lastaufnahmemittels 12 und/oder als Fahrlicht bzw. Standlicht zur Ausleuchtung des Fahrbereichs vor dem Flurförderzeugs 1 ausgebildet sein.

Das Leuchtelement 22 ist im oberen Bereich des Anschlussbauteils 17 angeordnet und weist die Funktion eines nach oben gerichteten Arbeitsscheinwerfers auf, mit dem der Arbeitsbereich bei angehobenem Lastaufnahmebereich im oberen Hubbereich ausgeleuchtet werden kann.

Das Leuchtelement 23 ist im hinteren bzw. unteren Bereich des Anschlussbauteils 17 angeordnet und dem Fahrerarbeitsplatz 7 zugewandt. Das Leuchtelement 23 kann somit von der im Fahrerarbeitsplatz 7 befindlichen Bedienperson eingesehen werden.

Das Leuchtelement 23 ist bevorzugt als Fahrzeugszustandsanzeige auszubilden. Das Leuchtelement 23 bildet somit eine Zustandsanzeige zum aktuellen Fahrzeugszustand, mit dem beispielsweise angezeigt werden kann, dass sich das Flurförderzeug in einer In-Betriebs-Stellung oder einer Außer-Betriebs-Stellung befindet. Weitere denkbare Fahrzeugszustände, die an dem Leuchtelement 23 angezeigt werden können, wären beispielsweise der Betrieb des Fahrzeugs in einem Normal-Betriebsmodus oder einem Energiespar-Modus oder der Volllastbetrieb.

Das Leuchtelement 23 kann alternativ oder zusätzlich als Betriebszustandsanzeige, insbesondere als Zustandsanzeige für die Hubgerüsteinstellungen, ausgebildet werden. Als denkbare Hubgerüsteinstellungen bzw. Betriebsparameter können mit derartigen Leuchtelementen einer oder mehrere der folgenden Einstellungen angezeigt werden, die von der Bedienperson bei der Betätigung des Arbeitshydraulik und somit während des Ein- und Ausstapelns von Lasten mit dem Lastaufnahmemittel 12 mit einem auf das Lastaufnahmemittel 12 gerichteten Blickfeld eingesehen werden können:
- Hub- bzw. Senkengeschwindigkeit eines Lastaufnahmemittels
- Hubhöhe
- Neigegeschwindigkeit des Hubgerüstes
- Mastsenkrechtstellung
- Überlastung bzw. Normalbetrieb

In der Figur 4 ist ein Anschlussbauteil 15 zur Anbindung des Neigeantriebs 13 näher dargestellt.

Das Anschlussbauteil 15, das von einem Schmiede- oder Stahlteil gebildet sein kann, ist an der Außenseite des Hubgerüstprofils 11 befestigt, beispielsweise angeschweißt, und erstreckt sich in Richtung zu dem Fahrzeugkörper 4 nach hinten, wobei in dem nach hinten abstehenden Bereich ein nicht näher dargestellter Flansch zur gelenkigen Anbindung des von dem Neigezylinder gebildeten Neigeantriebs 13 angeordnet ist.

Erfindungsgemäß ist in dem Anschlussbauteil 15 mindestens ein Leuchtelement 24, 25 integriert.

Das Anschlussbauteil 15 ist hierzu mit entsprechenden Ausnehmungen bzw. Aussparungen 34, 35 versehen, in denen die entsprechenden Leuchtelemente 24, 25 derart eingebaut sind, dass sich die Leuchtelemente 24, 25 vor Beschädigungen geschützt innerhalb der Außenkontur des Anschlussbauteils 15 integriert sind.

Die Leuchtelemente 24, 25 sind hierbei im vorderen Bereich des Anschlussbauteil 15 angeordnet und auf den Fahrweg vor dem Flurförderzeug 1 bzw. den Arbeitsbereich des Lastaufnahmemittels 12 gerichtet. Das Leuchtelement 24 ist hierbei im vorderen, unteren Bereich des Anschlussbauteils 15 und das Leuchtelement 25 im vorderen, oberen Bereich des Anschlussbauteils 15 angeordnet und integriert. Die Leuchtelemente 24, 25 können hierbei die Funktion eines Arbeitsscheinwerfers zur Beleuchtung des Arbeitsbereich bei abgesenkten Lastaufnahmemittel 12 und/oder als Fahrlicht bzw. Standlicht zur Ausleuchtung des Fahrbereichs vor dem Flurförderzeugs 1 ausgebildet sein.

Die Lichtelemente 20-25 können derart in die Ausnehmungen 30-35 eingebaut werden, dass zusätzlich ein Lichtaustritt zur Seite erfolgt. Die Leuchtelemente 20-25 können somit ebenfalls die Funktion von Positionsleuchten und einer Positionsbeleuchtung oder einer Sicherheitsbeleuchtung aufweisen, mit denen die Umrisse des Hubgerüstes nach vorne und seitlich kenntlich gemacht werden.

Die Leuchtelemente 20, 21, 22, 23, 24, 25 sind bevorzugt als LED's ausgebildet, die einzeln oder zu mehreren als Lichtband bzw. flächiger Bereich angeordnet sein.

Die Stromversorgung der Leuchtelemente 20-25 kann über das Bordnetz des Flurförderzeugs 1 erfolgen, wozu ein entsprechendes elektrisches Versorgungskabel von dem Flurförderzeug 1 zum Hubgerüst 2 geführt ist. Hierdurch ist insbesondere bei den Leuchtelementen, die einen Arbeitsscheinwerfer bzw. eine Fahrtlicht oder Standlicht bilden, und einen entsprechend kontinuierlichen Stromverbrauch aufweisen, eine sichere und ausreichende Versorgung mit elektrischer Energie erzielbar.

Bei den Leuchtelementen 20-25, die als Fahrzeugszustandsanzeige oder als Betriebszustandsanzeige bzw. als Positionsbeleuchtung oder Sicherheitsbeleuchtung ausgebildet sind und einen entsprechenden geringen Stromverbrauch aufweisen, kann anstelle einer Versorgung durch das Bordnetz des Flurförderzeugs eine lokale Energieversorgung mit photovoltaischen Elementen, beispielsweise Solarzellen erfolgen, die in der Nähe des entsprechenden Leuchtelements an dem entsprechenden Anschlussbauteil 15 bzw. 17 angebaut oder in das entsprechenden Anschlussbauteil 15 bzw. 17 eingebaut ist.

Die Leuchtelementen 20-25, die als Fahrzeugszustandsanzeige oder als Betriebszustandsanzeige ausgebildet sind, stehen mit entsprechenden Sensoren oder einer elektrischen Fahrzeugsteuerung 40 im Flurförderzeug 1 in Verbindung, mit der die entsprechenden an dem Leuchtelement angezeigten Fahrzeugszustände oder Betriebszustände ermittelt werden. Die Verbindung von den Sensoren bzw. der Fahrzeugsteuerung 40 im Flurförderzeug 1 zu den Leuchtelementen 20-25 am Hubgerüst 2 kann über eine Kabelverbindung oder eine drahtlose Verbindung, bevorzugt eine Funkverbindung oder Bluetooth-Verbindung, erfolgen.

Bevorzugt weisen die Leuchtelemente 20-25, insbesondere die als Fahrzeugszustandsanzeige oder als Betriebszustandsanzeige oder als Positionsbeleuchtung ausgebildet sind, verschiedene Farben auf. Dadurch ist es auf einfache Weise möglich, der Bedienperson durch entsprechende Farben eine einfache Informationsaufnahme zu ermöglichen. So kann beispielsweise durch eine rote LED ein bestimmter Fahrzeugszustand oder Betriebszustand angezeigt werden. Zudem kann hierdurch einem Fuhrparkleiter in der Umgebung des Flurförderzeugs 1 ein Normalbetrieb oder Abweichungen hiervon auf einfache Weise angezeigt werden.

Die in dem Hubgerüst 2 integrierten Leuchtelemente 20-25 ermöglichen durch die Integration in die von den Anschlussbauteilen 15 bzw. 17 gebildeten Hubgerüstelemente einen einfachen Aufbau mit einem geringen Herstellaufwand und Montageaufwand, da keine zusätzlichen Halter durch die integrale Bauweise erforderlich sind. An den Hubgerüstprofilen 11 sind keine Befestigungsbohrungen für bislang notwendige Halter erforderlich, so dass die Hubgerüstprofile 11 keine Materialschwächung erfahren und eine hohe Stabilität aufweisen. Zudem ergibt sich eine vor Beschädigungen geschützte Anordnung der integralen Leuchtelemente 20-25. Die in dem Hubgerüst 2 integrierten Leuchtelemente 20-25 ermöglichen zudem eine einfache und sichere Informationsaufnahme der Bedienperson, da die Bedienperson beim Ein- und Ausstapeln von Lasten mit dem Lastaufnahmemittel 12 an den Leuchtelementen 20-25 mit einem auf das Hubgerüst 2 gerichteten Blickfeld Fahrzeugszustände oder als Betriebszustände erfassen kann ohne das Blickfeld auf eine Anzeige oder einen Display im Fahrerarbeitsplatz 7 abändern zu müssen.

## Patentansprüche

1. Hubgerüst (2) für ein Flurförderzeug (1) mit einem Leuchtelement (20; 21; 22; 23; 24; 25), wobei ein Lastaufnahmemittel (12) an dem Hubgerüst (2) höhenverstellbar geführt ist, **dadurch gekennzeichnet, dass** das Hubgerüst (2) mit mindestens einem Leuchtelement (20; 21; 22; 23; 24; 25) versehen ist, das in einem tragenden und kraftführenden Hubgerüstelement (11; 15; 16; 17) des Hubgerüstes (2) integral eingebaut ist.

2. Hubgerüst nach Anspruch 1, **dadurch gekennzeichnet, dass** das Hubgerüstelement von einem vertikalen Hubgerüstprofil (11) eines Standmastes oder eines Ausfahrmastes des Hubgerüstes (2) gebildet ist.

3. Hubgerüst nach Anspruch 1 oder 2, **dadurch gekennzeichnet, dass** das Hubgerüstelement von einer Querstrebe (16) oder einem Anschlussbauteil (17) der Querstrebe (16) gebildet ist.

4. Hubgerüst nach einem der Ansprüche 1 bis 3, **dadurch gekennzeichnet, dass** das Hubgerüstelement von einem Anschlussbauteil (15) eines Neigeantriebs (13) eines Standmastes gebildet ist.

5. Hubgerüst nach einem der Ansprüche 1 bis 4, **dadurch gekennzeichnet, dass** das Leuchtelement (20; 21; 22; 23; 24; 25) als Arbeitsscheinwerfer oder Fahrtlicht oder Standlicht ausgebildet ist.

6. Hubgerüst nach einem der Ansprüche 1 bis 5, **dadurch gekennzeichnet, dass** das Leuchtelement (20; 21; 22; 23; 24; 25) als Fahrzeugszustandsanzeige ausgebildet ist.

7. Hubgerüst nach einem der Ansprüche 1 bis 6, **dadurch gekennzeichnet, dass** das Leuchtelement (20; 21; 22; 23; 24; 25) als Betriebszustandsanzeige ausgebildet ist.

8. Hubgerüst nach einem der Ansprüche 1 bis 7, **dadurch gekennzeichnet, dass** das Leuchtelement (20; 21; 22; 23; 24; 25) als Positionsbeleuchtung ausgebildet ist.

9. Hubgerüst nach Anspruch 6 oder 7, **dadurch gekennzeichnet, dass** das Leuchtelement (20; 21; 22; 23; 24; 25) mit einer elektronischen Fahrzeugsteuerung (40) oder Sensoreinrichtungen in Wirkverbindung steht.

10. Hubgerüst nach Anspruch 9, **dadurch gekennzeichnet, dass** die Verbindung als drahtlose Verbindung ausgebildet ist.

11. Hubgerüst nach einem der Ansprüche 1 bis 10, **dadurch gekennzeichnet, dass** das Leuchtelement (20; 21; 22; 23; 24; 25) als Sicherheitsbeleuchtung ausgebildet ist.

12. Hubgerüst nach einem der Ansprüche 1 bis 11, **dadurch gekennzeichnet, dass** das Leuchtelement (20; 21; 22; 23; 24; 25) von mindestens einer LED gebildet ist.

13. Hubgerüst nach einem der Ansprüche 1 bis 12, **dadurch gekennzeichnet, dass** die Energieversorgung des Leuchtelements (20; 21; 22; 23; 24; 25) über das Bordnetz des Flurförderzeugs (1) erfolgt.

14. Hubgerüst nach einem der Ansprüchen 1 bis 12, **dadurch gekennzeichnet, dass** die Energieversorgung des Leuchtelements (20; 21; 22; 23; 24; 25) über ein in der Nähe des Leuchtelements (20; 21; 22; 23; 24; 25) angeordnetes photovoltaisches Element, insbesondere eine Solarzelle, erfolgt.

15. Hubgerüst nach Anspruch 8, **dadurch gekennzeichnet, dass** das Leuchtelement (20; 21; 22; 23; 24; 25) als fluoreszierendes Kunststoffbauteil ausgebildet ist.

16. Flurförderzeug (1) mit einem Hubgerüst (2) nach einem der vorangegangenen Ansprüche.

## Claims

1. Lifting frame (2) for an industrial truck (1) having a light element (20; 21; 22; 23; 24; 25), wherein a load receiving means (12) on the lifting frame (2) is guided in a vertically adjustable fashion, **characterized in that** the lifting frame (2) is provided with at least one light element (20; 21; 22; 23; 24; 25) which is integrally installed in a carrying and force-conducting lifting frame element (11; 15; 16; 17) of the lifting frame (2).

2. Lifting frame according to Claim 1, **characterized in that** the lifting frame element is formed by a vertical lifting frame profile (11) of a vertical mast or of an extendable mast of the lifting frame (2).

3. Lifting frame according to Claim 1 or 2, **characterized in that** the lifting frame element is formed by a transverse strut (16) or a connecting component (17) of the transverse strut (16).

4. Lifting frame according to one of Claims 1 to 3, **characterized in that** the lifting frame element is formed by a connecting component (15) of an inclination drive (13) of a vertical mast.

5. Lifting frame according to one of Claims 1 to 4, **characterized in that** the light element (20; 21; 22; 23; 24; 25) is embodied as a working headlight or full beam light or parking light.

6. Lifting frame according to one of Claims 1 to 5, **characterized in that** the light element (20; 21; 22; 23; 24; 25) is embodied as a vehicle state display.

7. Lifting frame according to one of Claims 1 to 6, **characterized in that** the light element (20; 21; 22; 23; 24; 25) is embodied as an operating state display.

8. Lifting frame according to one of Claims 1 to 7, **characterized in that** the light element (20; 21; 22; 23; 24; 25) is embodied as position lighting.

9. Lifting frame according to Claim 6 or 7, **characterized in that** the light element (20; 21; 22; 23; 24; 25) is operatively connected to an electronic vehicle controller (40) or to sensor devices.

10. Lifting frame according to Claim 9, **characterized in that** the connection is embodied as a wireless connection.

11. Lifting frame according to one of Claims 1 to 10, **characterized in that** the light element (20; 21; 22; 23; 24; 25) is embodied as safety lighting.

12. Lifting frame according to one of Claims 1 to 11, **characterized in that** the light element (20; 21; 22; 23; 24; 25) is formed by at least one LED.

13. Lifting frame according to one of Claims 1 to 12, **characterized in that** the power supply of the light element (20; 21; 22; 23; 24; 25) is provided via the on-board power system of the industrial truck (1).

14. Lifting frame according to one of Claims 1 to 12, **characterized in that** the power supply of the light element (20; 21; 22; 23; 24; 25) is provided via a photo-voltaic element, in particular a solar cell, arranged in the vicinity of the light element (20; 21; 22; 23; 24; 25).

15. Lifting frame according to Claim 8, **characterized in that** the light element (20; 21; 22; 23; 24; 25) is embodied as a fluorescent plastic component.

16. Industrial truck (1) having a lifting frame (2) according to one of the preceding claims.

## Revendications

1. Châssis de levage (2) pour un chariot de manutention (1), comprenant un élément lumineux (20 ; 21 ; 22 ; 23 ; 24 ; 25), un moyen de réception de charge (12) étant guidé de manière réglable en hauteur sur le châssis de levage (2), **caractérisé en ce que** le châssis de levage (2) est muni d'au moins un élément lumineux (20 ; 21 ; 22 ; 23 ; 24 ; 25) qui est intégré d'un seul tenant dans un élément de châssis de levage (11 ; 15 ; 16 ; 17), porteur et transmettant les forces, du châssis de levage (2).

2. Châssis de levage selon la revendication 1, **caractérisé en ce que** l'élément de châssis de levage est formé par un profilé vertical de châssis de levage (11) d'un mât de support ou d'un mât déployable du châssis de levage (2).

3. Châssis de levage selon la revendication 1 ou 2, **caractérisé en ce que** l'élément de châssis de levage est formé par une traverse (16) ou un composant de raccordement (17) de la traverse (16).

4. Châssis de levage selon l'une quelconque des revendications 1 à 3, **caractérisé en ce que** l'élément de châssis de levage est formé par un composant de raccordement (15) d'un entraînement d'inclinaison (13) d'un mât de support.

5. Châssis de levage selon l'une quelconque des revendications 1 à 4, **caractérisé en ce que** l'élément lumineux (20 ; 21 ; 22 ; 23 ; 24 ; 25) est réalisé sous forme de projecteur de travail ou de phare ou de veilleuse.

6. Châssis de levage selon l'une quelconque des revendications 1 à 5, **caractérisé en ce que** l'élément lumineux (20 ; 21 ; 22 ; 23 ; 24 ; 25) est réalisé sous forme d'indicateur d'état de véhicule.

7. Châssis de levage selon l'une quelconque des revendications 1 à 6, **caractérisé en ce que** l'élément lumineux (20 ; 21 ; 22 ; 23 ; 24 ; 25) est réalisé sous forme d'indicateur d'état de fonctionnement.

8. Châssis de levage selon l'une quelconque des revendications 1 à 7, **caractérisé en ce que** l'élément lumineux (20 ; 21 ; 22 ; 23 ; 24 ; 25) est réalisé sous forme d'éclairage de position.

9. Châssis de levage selon la revendication 6 ou 7, **caractérisé en ce que** l'élément lumineux (20 ; 21 ; 22 ; 23 ; 24 ; 25) est en liaison fonctionnelle avec une commande électronique de véhicule (40) ou avec des dispositifs de détection.

10. Châssis de levage selon la revendication 9, **caractérisé en ce que** la liaison est réalisée sous forme de liaison sans fil.

11. Châssis de levage selon l'une quelconque des revendications 1 à 10, **caractérisé en ce que** l'élément lumineux (20 ; 21 ; 22 ; 23 ; 24 ; 25) est réalisé sous forme d'éclairage de sécurité.

12. Châssis de levage selon l'une quelconque des revendications 1 à 11, **caractérisé en ce que** l'élément lumineux (20 ; 21 ; 22 ; 23 ; 24 ; 25) est formé par au moins une DEL.

13. Châssis de levage selon l'une quelconque des revendications 1 à 12, **caractérisé en ce que** l'alimentation en énergie de l'élément lumineux (20 ; 21 ; 22 ; 23 ; 24 ; 25) s'effectue par le biais du réseau de bord du chariot de manutention (1).

14. Châssis de levage selon l'une quelconque des revendications 1 à 12, **caractérisé en ce que** l'alimentation en énergie de l'élément lumineux (20 ; 21 ; 22 ; 23 ; 24 ; 25) s'effectue par le biais d'un élément photovoltaïque disposé à proximité de l'élément lumineux (20 ; 21 ; 22 ; 23 ; 24 ; 25), en particulier par le biais d'une cellule solaire.

15. Châssis de levage selon la revendication 8, **caractérisé en ce que** l'élément lumineux (20 ; 21 ; 22 ; 23 ; 24 ; 25) est réalisé sous forme de composant en plastique fluorescent.

16. Chariot de manutention (1) comprenant un châssis de levage (2) selon l'une quelconque des revendications précédentes.
